# EUROPEAN PATENT APPLICATION

(11) **EP 3 549 757 A1**
(43) Date of publication of application: **09.10.2019**
(21) Application number: 17875788.6
(22) Date of filing: 14.04.2017
(51) Int. Cl.: B32B 5/26, A41D 27/00, A41D 31/00, A41D 31/02, A47G 9/02

(54) **COLD PROTECTION MATERIAL, PRODUCTION METHOD FOR SAME, AND COLD PROTECTION WEAR**

(30) Priority: 02.12.2016 JP 2016235220
(71) Applicant: Onward Holdings Co., Ltd., Tokyo 103-8239 (JP)
(72) Inventor: OKANISHI, Yoshitaka, Tokyo 108-8439 (JP); MORI, Yuichiro, Tokyo 108-8439 (JP)
(74) Representative: Novaimo
(86) International application number: PCT/JP2017/015321
(87) International publication number: WO 2018/100763

(57) **Abstract**

The object of the present invention is to provide a cold protection material capable of preventing filler material from being released through needles holes and suppressing unevenness caused by stitches, since needle holes are not formed on either of two cloths between which the filler material is stored. The cold protection material according to the present invention configured to form a storage area between a first cloth and a second cloth by connecting the first cloth and the second cloth, each storage area filled with a filler material, wherein a connecting member connecting the first cloth and the second cloth comprises a first single-sided adhesive tape comprising one surface side thereof serving as a first bonding surface, and a second single-sided adhesive tape comprising one surface side thereof serving as a second bonding surface, wherein the first single-sided adhesive tape and the second single-sided adhesive tape are sewed together with the first bonding surface and the second bonding surface opposed to each other, one side of the first bonding surface and one side of the second bonding surface opposed thereto are bonded to a back surface of the first cloth, and the other side of the first bonding surface and the other side of the second bonding surface opposed thereto are bonded to a back surface of the second cloth, by which the first cloth and the second cloth are connected.

## Description

### [Technical Field]

The present invention relates to cold protection material used for cold protection wear and the like, production method of cold protection material, and cold protection wear.

### [Background Art]

Examples of cold protection wear in which a filler material such as feather, cotton and the like is filled include coat, jacket, vest, trousers and pants.

Patent Literature 1 discloses arranging a hot melt tape between an outer material and a lining. It discloses that the hot melt tape is folded once in an upward crease and a center portion thereof is sewn to the lining, with one part bonded to a back surface of the outer material and the other part bonded to the lining, so that filler material is prevented from leaking out through a seam on the lining.

### [Citation List]

### [Patent Literature]

[PTL 1] Publication of Japanese Utility Model Registration No. 3105925

### [Summary of Invention]

### [Technical Problem]

Since a seam is visible on the lining, another cloth is arranged to cover the seam.

The object of the present invention is to provide a cold protection material, production method of cold protection material and cold protection wear that has no needle holes formed on either of two cloths between which filler material is stored, so that filler material can be prevented from being released through the needle holes and unevenness caused by stitches can be suppressed.

### [Solution to Problem]

In order to achieve the objects described above, a first cold protection material according to the present invention relates to a cold protection material configured to form a storage area between a first cloth and a second cloth by connecting the first cloth and the second cloth, each storage area filled with a filler material, wherein a connecting member connecting the first cloth and the second cloth comprises a first single-sided adhesive tape comprising one surface side thereof serving as a first bonding surface, and a second single-sided adhesive tape comprising one surface side thereof serving as a second bonding surface, wherein the first single-sided adhesive tape and the second single-sided adhesive tape are sewed together with the first bonding surface and the second bonding surface opposed to each other, one side of the first bonding surface and one side of the second bonding surface opposed thereto are bonded to a back surface of the first cloth, and the other side of the first bonding surface and the other side of the second bonding surface opposed thereto are bonded to a back surface of the second cloth, by which the first cloth and the second cloth are connected.

A second cold protection material according to the present invention relates to a cold protection material configured to form a storage area between a first cloth and a second cloth by connecting the first cloth and the second cloth, each storage area filled with a filler material, wherein a connecting member connecting the first cloth and the second cloth comprises a first single-sided adhesive tape comprising one surface side thereof serving as a first bonding surface and the other surface side thereof serving as a first non-bonding surface, a second single-sided adhesive tape comprising one surface side thereof serving as a second bonding surface and the other side surface thereof serving as a second non-bonding surface, and a mesh tape, at least a portion of which is meshed, wherein the first single-sided adhesive tape and one side of the mesh tape are sewed together with the first non-bonding surface and the first surface of the mesh tape opposed to each other, the second single-sided adhesive tape and the other side of the mesh tape are sewed together with the second non-bonding surface and the second surface of the mesh tape opposed to each other, the first bonding surface is bonded to a back surface of the first cloth, and the second bonding surface is bonded to a back surface of the second cloth, by which the first cloth and the second cloth are connected.

A cold protection wear is composed of the cold protection material according to the first or second cold protection material according to the present invention.

A production method of the first cold protection material according to the present invention comprises the steps of sewing two single-sided adhesive tapes together in a state where respective bonding surfaces of the adhesive tapes are opposed to each other, connecting the two cloths by bonding the two single-sided adhesive tapes and the two cloths in a state where the bonding surface is spread, and filling a filler material between the two cloths being connected.

A production method of the second cold protection material comprises the steps of sewing a first single-sided adhesive tape and a mesh tape together in a state where a non-bonding surface of the first single-sided adhesive tape is arranged close to one side of a first surface of the mesh tape, at least a portion of which is meshed, sewing a second single-sided adhesive tape and the mesh tape together in a state where a non-bonding surface of the second single-sided adhesive tape is arranged close to the other side of a second surface of the mesh tape, connecting the two cloths by bonding a bonding surface of the first single-sided adhesive tape and one of two cloths covering a filler material and by bonding a bonding surface of the second single-sided adhesive tape and the other cloth, and filling a filler material between the two cloths being connected.

### [Advantageous Effects of Invention]

The cold protection material, production method of cold protection material and cold protection wear according to the present invention configured as described above has no needle holes formed on either of the two cloths between which the filler material is stored, so that filler material can be prevented from being released through the needle holes and unevenness caused by stitches can be suppressed.

### [Brief Description of Drawings]

FIG. 1 illustrates a cold protection material according to a first embodiment of the present invention, wherein A is a general view of a left front panel, B is an enlarged view of a connecting member (X-shaped adhesive tape), and C is a cross-sectional view of a left front panel.
FIG. 2A is a flowchart of a production method of cold protection material according to the first embodiment of the present invention, illustrating a process of preparing two single-sided adhesive tapes each having an adhesive resin surface with adhesive resin applied on one side thereof.
FIG. 2B is a flowchart of the production method of cold protection material according to the first embodiment of the present invention, illustrating a process of superposing the two single-sided adhesive tapes with the respective adhesive resin surfaces facing an inner side.
FIG. 2C is a flowchart of the production method of cold protection material according to the first embodiment of the present invention, illustrating a process of sewing together the two single-sided adhesive tapes.
FIG. 3A is a flowchart of the production method of cold protection material according to the first embodiment of the present invention, illustrating a process of folding the adhesive resin surfaces of the two single-sided adhesive tape at the seam.
FIG. 3B is a flowchart of the production method of cold protection material according to the first embodiment of the present invention, illustrating a process of filling a heat insulating material 19 in storage areas, which are areas formed on an inner side of two cloths bonded together by two single-sided adhesive tapes.
FIG. 4 illustrates a cold protection material according to a second embodiment of the present invention, wherein A is a general view of a left front panel, B is an enlarged view of a connecting member (Z-shaped adhesive tape, and C is a cross-sectional view of the left front panel.
FIG. 5A is a flowchart of a production method of the cold protection material according to the second embodiment of the present invention, illustrating a process of preparing two single-sided adhesive tapes each having an adhesive resin surface with adhesive resin applied thereto on one side, and a mesh tape.
FIG. 5B is a flowchart of the production method of the cold protection material according to the second embodiment of the present invention, illustrating a process of arranging the two-single-sided adhesive tapes on edges of front and back surfaces the mesh tape.
FIG. 6A is a flowchart of the production method of the cold protection material according to the second embodiment of the present invention, illustrating a process of sewing a center of width the two single-sided adhesive tapes in a longitudinal direction.
FIG. 6B is a flowchart of the production method of the cold protection material according to the second embodiment of the present invention, illustrating a process of filling a heat insulating material 29 in a storage area serving as an inner area of two cloths bonded by two single-sided adhesive tapes through a mesh tape.

### [Description of Embodiments]

Embodiments of the present invention are described hereafter with reference to the drawings.

### First Embodiment

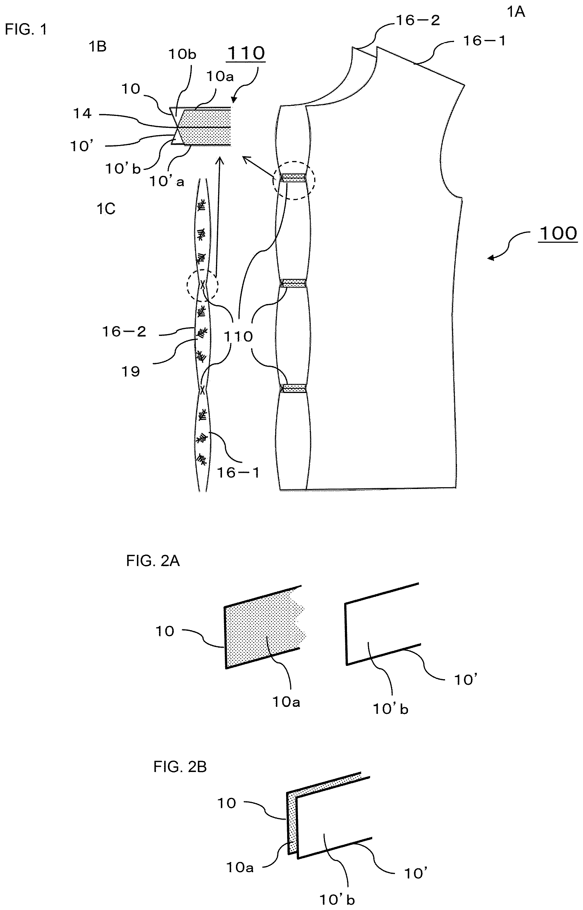

FIG. 1 illustrates a cold protection material 100 according to a first embodiment of the present invention, wherein A is a general view of a left front panel, B is an enlarged view of a connecting member (X-shaped adhesive tape) 110, and C is a cross-sectional view of a left front panel.

### (Configuration)

FIG. 1A is a general view of a left front panel using the cold protection material 100 according to the first embodiment. The left front panel is composed of two cloths (outer material 16-1 and lining 16-2) that cover a left front side of a body, and a connecting member 110 that connects the two cloths (16-1, 16-2).

FIG. 1B is a view illustrating the connecting member 110 in enlarged view. The connecting member according to the first embodiment is composed of two single-sided adhesive tapes (10, 10'), each tape having an adhesive resin applied to one side thereof.

The two single-sided adhesive tapes (10, 10') are arranged so that respective bonding surfaces (10a, 10a') of the tapes face each other and respective non-bonding surfaces (10b, 10'b) face outward, and the tapes are sewn along a longitudinal direction. A seam 14 is visible on the non-bonding surface.

After sewing is completed, the bonding surfaces (10a, 10'a) facing each other are folded at the seam 14 and then spread, by which one side of the bonding surface 10a and one side of the bonding surface 10'a rise and the other side of the bonding surface 10a and the other side of the bonding surface 10a' rise, forming an X-shaped adhesive tape.

The connecting member 110 is arranged between the two cloths (16-1, 16-2) in the following manner. One side of the bonding surface 10a and one side of the bonding surface 10'a are arranged to face a back surface of the outer material 16-1, and the other side of the bonding surface 10a and the other side of the bonding surface 10'a are arranged to face a back surface of the lining 16-2.

The seam 14 formed on the non-bonding surface (10b, 10'b) is hidden from the back surface of the outer material 16-1 and the back surface of the lining 16-2, and the seam 14 is visible not as a line formed in a longitudinal direction but only as a point on an end of the X-shaped adhesive tape (connecting member) 110. A solid line illustrated between one side of the bonding surface 10a and one side of the bonding surface 10'a facing the back surface of the outer material 16-1 is actually a boundary (or crease) between one side of the bonding surface 10a and one side of the bonding surface 10'a.

FIG. 1C is a cross-sectional view of the left front panel, illustrating a state where the connecting member 110 is connecting the back surface of the outer material 16-1 and the back surface of the lining 16-2. One side of the bonding surface 10a and one side of the bonding surface 10'a of the connecting member 110 are bonded with the back surface of the outer material 16-1, and the other side of the bonding surface 10a and the other side of the bonding surface 10'a are bonded with the back surface of the lining 16-2, by which the back surface of the outer material 16-1 and the back surface of the lining 16-2 are connected by the connecting member 110.

In a state where the back surface of the outer material 16-1 and the back surface of the lining 16-2 are connected by the X-shaped adhesive tape serving as the connecting member 110, a storage area is formed between the outer material 16-1 and the lining 16-2. By filling a heat insulating material 19 such as feathers and fiber cotton in the storage area, the cold protection material 100 is formed.

### (Production Method)

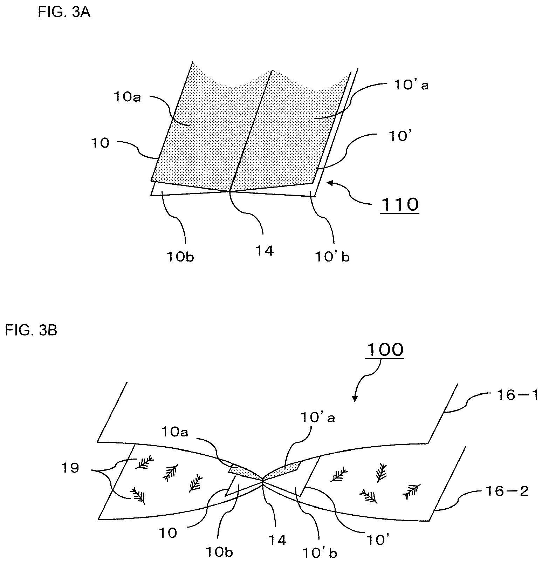

Next, a production method of the cold protection material 100 will be described with reference to FIGs. 2 and 3. FIGs. 2 and 3 are views having enlarged the area surrounded by the dotted line of FIG. 1A.

FIGs. 2A, B and C are a flowchart illustrating a production method of the cold protection material 100, wherein a process prior to sewing is illustrated. As illustrated in FIG. 2A, two single-sided adhesive tapes (10, 10') each having an adhesive resin surface in which an adhesive resin is applied on one side are prepared. The tapes are arranged with the adhesive resin surfaces (10a, 10'a (not shown)) opposed to each other, so that the non-bonding surfaces (10b (not shown), 10'b) form the outer surface. For example, a single-sided adhesive tape having a width of 20 mm is used as the two single-sided adhesive tapes (10, 10'). However, this tape width is merely an example, and an arbitrary tape width can be used.

There is no specific limit in the adhesive resin being used, but it should preferably be thermoplastic resin, one example of which is a hot melt resin. Other specific examples of thermoplastic resin include polyamide resin, polyester resin, polyurethane resin, polyethylene resin and ethylene - vinyl acetate copolymer. Among these resin, polyamide resin, polyester resin and polyurethane resin are preferable.

Next, as illustrated in FIG. 2B, two single-sided adhesive tapes (10, 10') are superposed with the respective adhesive resin surfaces facing inward.

In a state where the respective adhesive resin surfaces are opposed to each other, a center of width of the two single-sided adhesive tapes (10, 10') are sewn along the longitudinal direction. As illustrated in FIG. 2C, the seam 14 illustrated by the dotted line is formed to the two single-sided adhesive tapes (10, 10').

FIGs. 3A and B illustrate a state subsequent to the flowchart of the production method of the cold protection material 100, wherein a process for completing the cold protection material 100 is illustrated. As illustrated in FIG. 3A, the adhesive resin surfaces (10a, 10'a) of the two single-sided adhesive tapes (10, 10') are folded at the seam 14. The two single-sided adhesive tapes are spread in an X-shape. The non-bonding surfaces (10b, 10b') are mutually arranged inward, and the seam 14 illustrated by the dotted line is not visible to the outer side of the adhesive resin surfaces (10a, 10'a).

A boundary (or crease) between half of the bonding surface 10a and half of the bonding surface 10'a is illustrated by the solid line, but there is no level difference between the surfaces of half of the bonding surface 10a and half of the bonding surface 10'a, and the surfaces are flat (so-called flush state).

As illustrated in FIG. 3B, in a state where the connecting member 110 formed of two single-sided adhesive tapes (10, 10') arranged in a state where the seam 14 is not visible to the exterior is placed between the outer material 16-1 and the lining 16-2 and heated in a bonding apparatus, the adhesive resin will be adhered. Half of the bonding surface 10a and half of the bonding surface 10'a are bonded to the inner side surface (or the back surface) of the outer material 16-1, and the remaining half of the bonding surface 10a and the remaining half of the bonding surface 10'a are bonded to the inner side surface (or the back surface) of the lining 16-2. Further, the cold protection material 100 is completed by filling the heat insulating material 19 to the storage area which is an inner side area between two cloths (16-1, 16-2) bonded by the two single-sided adhesive tapes (10, 10').

### (Effect)

According to the cold protection material 100 of the first embodiment, the cold protection material can be created in a state where the seam 14 is not visible to the exterior, that is, in a state where needle holes are not formed on the cloth. Since there are no seams on the bonding surface that bonds with the respective cloths, unevenness caused by stitches can be suppressed. In this description, "unevenness caused by stitches" refers to a state where the finishing performed on the rear side can be recognized from the front surface.

The first embodiment was described by illustrating the left front panel as an example, but by similarly forming a right front panel, a back panel and right and left sleeves using the cold protection material, and by sewing the back panel, the right and left front panels and the right and left sleeves, an upper garment can be formed. The upper garment formed in this manner does not have needle holes formed on either of the two cloths between which the filler material is stored, so that releasing of filler material through the needle holes can be prevented, and unevenness caused by stitches can be suppressed. The above-described cold protection material can be applied not only to upper garments but also to various cold protection wears.

### (Modified Example)

The first embodiment described above is formed of two layers (the outer material 16-1 and the lining 16-2), but it is possible to attach another outer material or another lining in addition to the two layers to form a three-layer structure. Further, it is possible to attach a different outer material and different lining to the two-layer structure to realize a four-layer structure.

### [Second Embodiment]

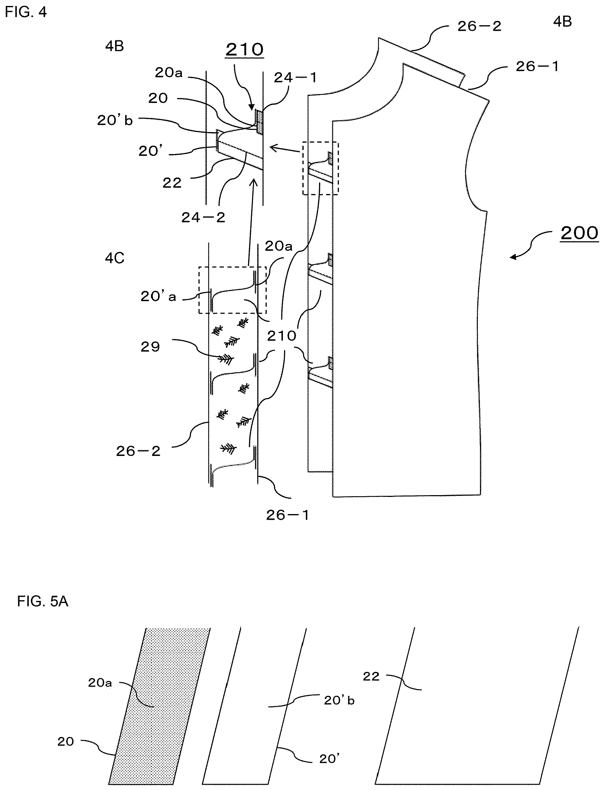

FIG. 4 illustrates a cold protection material according to a second embodiment of the present invention, wherein A is a general view of a left front panel, B is an enlarged view of a connecting member (Z-shaped adhesive tape) 210, and C is a cross-sectional view of the left front panel.

### (Configuration)

FIG. 4A is a general view of a left front panel using a cold protection material 200 according to a second embodiment. The left front panel is composed of two cloths (the outer material 26-1 and the lining 26-2) covering a left front side of the body, and a connecting member 210 connecting the two cloths (26-1, 26-2).

FIG. 4B is an enlarged view of the connecting member. In the second embodiment, the connecting member 210 is composed of two single-sided adhesive tapes (20 and 20') each having an adhesive resin applied on one side thereof, and a mesh tape 22.

The two single-sided adhesive tapes (20, 20') are arranged so that their respective bonding surfaces (20a, 20'a) are arranged outward with the mesh tape 22 interposed. Then, a non-bonding surface 20b (not shown) of the single-sided adhesive tape 20 is arranged to oppose to one side in a width direction of one surface side of the mesh tape 22, and a the non-bonding surface 20'b of the single-sided adhesive tape 20' is arranged to oppose to one side in the width direction of the other surface of the mesh tape 22.

In this state, the single-sided adhesive tape 20 and the mesh tape 22 are sewn together, and the single-sided adhesive tape 20' and the mesh tape 22 are sewn together. The single-sided adhesive tape 20 and the mesh tape 22 are sewn at a seam 24-1, and the single-sided adhesive tape 20' and the mesh tape 22 are sewn at a seam 24-2.

If the space between the single-sided adhesive tape 20 and the single-sided adhesive tape 20' are spread after sewing the tapes together, the single-sided adhesive tapes 20 and 20' are in a state sewn to upper and lower surfaces at both ends of the mesh tape 22.

The adhesive tape is arranged between two cloths (26-1, 26-2) with a bonding surface 20a of the adhesive tape facing the back surface of the outer material 26-1 and a bonding surface 20'a facing the back surface of the lining 26-2, and the tape is heat sealed thereto.

FIG. 4C is a cross-sectional view of the left front panel, illustrating a state where a Z-shaped adhesive tape is connecting the back surface of the outer material 26-1 and the back surface of the lining 26-2. By the bonding surface 20a bonding with the back surface of the outer material 26-1 and the bonding surface 20'a bonding with the back surface of the lining 26-2, the back surface of the outer material 26-1 and the back surface of the lining 26-2 are connected by the connecting member 210.

In a state where the back surface of the outer material 26-1 and the back surface of the lining 26-2 are connected by the connecting member 210 (Z-shaped adhesive tape), a storage area is formed between the outer material 26-1 and the lining 26-2. By filling a heat insulating material 29 such as feather and fiber cotton in the storage area, the cold protection material 200 is formed.

### (Production Method)

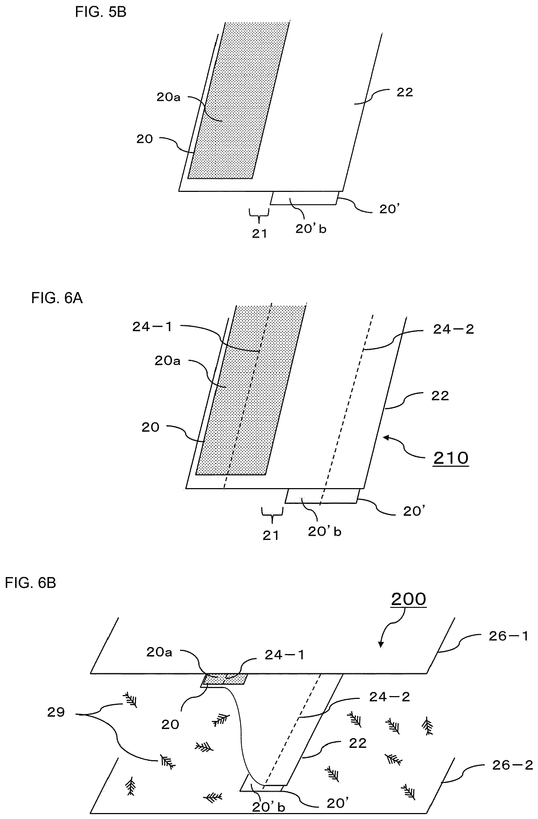

Next, a production method of the cold protection material 200 will be described with reference to FIGs. 5 and 6. FIGs. 5 and 6 are views having enlarged the area surrounded by the dotted line of FIG. 4A.

FIGs. 5A and 5B are a flowchart of a production method of the cold protection material 200, illustrating a process of placing the single-sided adhesive tapes under and above the mesh tape. As illustrated in FIG. 5A, two single-sided adhesive tapes (20, 20') each having an adhesive resin surface with adhesive resin applied to one side thereof and the mesh tape 22 are prepared. In the present embodiment, the width of the single-sided adhesive tapes (20, 20') are 15 mm, and the width of the mesh tape 22 is 40 mm, for example. The widths of the tapes are merely an example, and the widths of the tapes can be set wider or narrower arbitrarily. The adhesive resin is similar to the first embodiment.

Next, as illustrated in FIG. 5B, an adhesive resin surface 20a is arranged outward with respect to the mesh tape 22, and the single-sided adhesive tape 20 is superposed to a left side on a first surface of the mesh tape 22. Further, the non-bonding surface 20'b is opposed to the mesh tape 22, and the single-sided adhesive tape 20' is superposed to a right side of a second surface of the mesh tape 22. The two single-sided adhesive tapes (20, 20') are arranged at an edge of the front and back surfaces of the mesh tape 22 with an interval 21 formed therebetween by which a non-superposed area is formed.

FIGs. 6A and 6B illustrate a state subsequent to the flowchart of the production method of the cold protection material 200, wherein a process for completing the cold protection material 200 is illustrated. As illustrated in FIG. 6A, the two single-sided adhesive tapes (20, 20') are sewn at a center of width of the tapes in the longitudinal direction. Two seams (24-1, 24-2) are formed to the two single-sided adhesive tapes (20, 20') as illustrated by the dotted lines. The efficiency of the sewing operation will be improved by sewing the tapes using a two-needle sewing machine.

As illustrated in FIG. 6B, the adhesive resin surface 20a of the single-sided adhesive tape 20 having the seam 24-1 with the mesh tape 22 is arranged to face an inner side (or back surface) of the outer material 26-1 and an adhesive resin surface 20'a (not shown) of the single-sided adhesive tape 20' having the seam 24-2 with the mesh tape 22 is arranged to face an inner side (or back surface) of the lining 26-2, and the tapes are heated using a bonding apparatus. When the adhesive resin melts, the adhesive resin surface 20a is bonded to the inner side surface of the outer material 26-1 and the adhesive resin surface 20'a (not shown) is bonded to the inner side surface of the lining 26-2.

If the distance between the outer material 26-1 and the lining 26-2 is spread, the mesh tape 22 will be stretched to form a Z-shaped adhesive tape in which the mesh tape is spread in the shape of a letter Z by the two cloths (26-1, 26-2) and the mesh tape 22. The Z-shaped adhesive tape serves as a connecting member connecting the back surface of the outer material 26-1 and the back surface of the lining 26-2.

By filling the heat insulating material 29 to the storage area which is an area between the two cloths (26-1, 26-2) bonded through the mesh tape 22 by the two single-sided adhesive tapes (20, 20'), the cold protection material 200 is completed.

### (Effect)

According to the cold protection material 200 of the second embodiment, the cold protection material can be formed without forming needles holes on the two cloths (26-1, 26-2). This type of cold protection material can be applied to all types of cold protection wear, similar to the first embodiment.

Further, since the mesh tape 22 has an area 21 that is not superposed with the two single-sided adhesive tapes (20, 20') and not all of the two single-sided adhesive tapes (20, 20') and the mesh tape 22 are superposed with each other, the unevenness caused by stitches on the surface (side) material can be reduced.

Since air moves within the storage area through the net of the mesh tape 22, the filler material will easily swell out and bulkiness will increase even if only a small amount of filler material is filled, such that the amount of filler material can be decreased and weight reduction can be realized.

The present invention is not limited to the embodiments described above, and various modified examples are included in the scope of the present invention, such as application of the cold protection material to beddings and sleeping bags.

In addition, the above-described embodiments have been described in detail to help understand the present invention, and the present invention is not limited to a configuration including all the components described herein. For example, it is not necessary for the whole body of the mesh tape 22 to be meshed, and only a portion of the material of the mesh tape 22 may be meshed.

A portion of a configuration of an embodiment may be replaced with a configuration of another embodiment, and a configuration of an embodiment may be added to the configuration of another embodiment. A portion of a configuration of an embodiment may be added to, deleted from or replaced with a configuration of another embodiment.

### [Reference Signs List]

10, 10', 20, 20' single-sided adhesive tape
10a, 10'a, 20a, 20'a adhesive resin surface
10b, 10'b, 20b, 20'b non-bonding surface
14, 24-1, 24-2 seam
16-1, 26-1 outer material
16-2, 26-2 lining
19, 29 heat insulating material
22 mesh tape
100, 200 cold protection material
110 connecting member (X-shaped adhesive tape)
210 connecting member (Z-shaped adhesive tape)

## Claims

1. A cold protection material configured to form a storage area between a first cloth and a second cloth by connecting the first cloth and the second cloth, each storage area filled with a filler material,
wherein a connecting member connecting the first cloth and the second cloth comprises
a first single-sided adhesive tape comprising one surface side thereof serving as a first bonding surface, and
a second single-sided adhesive tape comprising one surface side thereof serving as a second bonding surface,
wherein the first single-sided adhesive tape and the second single-sided adhesive tape are sewed together with the first bonding surface and the second bonding surface opposed to each other,
one side of the first bonding surface and one side of the second bonding surface opposed thereto are bonded to a back surface of the first cloth, and
the other side of the first bonding surface and the other side of the second bonding surface opposed thereto are bonded to a back surface of the second cloth, by which the first cloth and the second cloth are connected.

2. A cold protection material configured to form a storage area between a first cloth and a second cloth by connecting the first cloth and the second cloth, each storage area filled with a filler material,
wherein a connecting member connecting the first cloth and the second cloth comprises
a first single-sided adhesive tape comprising one surface side thereof serving as a first bonding surface and the other surface side thereof serving as a first non-bonding surface,
a second single-sided adhesive tape comprising one surface side thereof serving as a second bonding surface and the other side surface thereof serving as a second non-bonding surface, and
a mesh tape, at least a portion of which is meshed,
wherein the first single-sided adhesive tape and one side of the mesh tape are sewed together with the first non-bonding surface and the first surface of the mesh tape opposed to each other,
the second single-sided adhesive tape and the other side of the mesh tape are sewed together with the second non-bonding surface and the second surface of the mesh tape opposed to each other,
the first bonding surface is bonded to a back surface of the first cloth, and
the second bonding surface is bonded to a back surface of the second cloth, by which the first cloth and the second cloth are connected.

3. A cold protection wear composed of the cold protection material according to claim 1 or claim 2.

4. A production method of a cold protection material comprising the steps of:
sewing two single-sided adhesive tapes together in a state where respective bonding surfaces of the adhesive tapes are opposed to each other;
connecting the two cloths by bonding the two single-sided adhesive tapes and the two cloths in a state where the bonding surface is spread; and
filling a filler material between the two cloths being connected.

5. A production method of a cold protection material comprising the steps of:
sewing a first single-sided adhesive tape and a mesh tape together in a state where a non-bonding surface of the first single-sided adhesive tape is arranged close to one side of a first surface of the mesh tape, at least a portion of which is meshed,
sewing a second single-sided adhesive tape and the mesh tape together in a state where a non-bonding surface of the second single-sided adhesive tape is arranged close to the other side of a second surface of the mesh tape,
connecting the two cloths by bonding a bonding surface of the first single-sided adhesive tape and one of two cloths covering a filler material and by bonding a bonding surface of the second single-sided adhesive tape and the other cloth, and
filling a filler material between the two cloths being connected.

6. The production method of a cold protection material according to claim 5,
wherein the step of sewing the first single-sided adhesive tape and the mesh tape and the step of sewing the second single-sided adhesive tape and the mesh tape are performed simultaneously, and
the step of bonding the bonding surface of the first single-sided adhesive tape and one of two cloths covering the filler material and bonding the bonding surface of the second single-sided adhesive tape and the other cloth are performed simultaneously.
